(19)

Europäisches
Patentamt
European
Patent Office
Office européen
des brevets

(11) **EP 2 568 353 A1**

(12) **EUROPEAN PATENT APPLICATION**

(43) Date of publication:
**13.03.2013 Bulletin 2013/11**

(51) Int Cl.:
***G06F 1/32*** *(2006.01)*      ***G06F 9/50*** *(2006.01)*

(21) Application number: **11007203.0**

(22) Date of filing: **06.09.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Basque Center for Applied Mathematics**
**48009 Bilbao (Bizkaia) (ES)**

(72) Inventors:
• **Verloop, Ina Maria**
  **48100 Mungia (Vizcaya) (ES)**
• **Anselmi, Jonatha**
  **48370 Bermeo (Vizcaya) (ES)**

(74) Representative: **Urteaga Simarro, José Antonio**
  **31, Principe de Vergara St.**
  **28001 Madrid (ES)**

(54) **Method for scaling the speed of operation of at least one processor unit in a virtualized resource-sharing system**

(57)      The invention refers to a method for scaling the speed of operation of at least one processor unit in a virtualized resource-sharing system in order to reduce power consumption, wherein the virtualized system comprises at least one server and a total number of N virtual machines (VMs) running on $N \cdot a$ switched-on processor units, by adjusting the speed of at least one processor unit (and preferably of all processor units) to its maximum speed multiplied by a factor that depends on the number of active VMs. Estimations of performance and power consumption are also part of the invention.

EP 2 568 353 A1

**Description**

**Technical field**

The invention refers to a method for scaling the speed of operation of at least one processor unit in a virtualized resource-sharing system where one or more server processor resources must be shared by various virtual machines (VMs).

**State of the art**

Certain types of computing equipment such as Internet servers, network routers, network switches, etc., provide several different operating systems simultaneously. An equipment of this kind, e.g. a server, is usually constructed as follows: the server comprises a set of processor units (CPUs), other hardware elements such as disks, and intangible features such as the available bandwidth, all of which form a set of common resources that the server must manage. On top of these resources, the server implements the aforementioned multiple operating systems, also known as virtual machines (VMs), each running their own tasks or IT services, for which the VMs are obliged to share the aforementioned common server resources. From the outside, the server is perceived as a set of separate servers, each running a different operating system; however, there is physically only one server, offering several virtual operating systems. This technology is known as virtualization technology.

Virtualization is possible by means of a software known as virtualization software or hypervisor, which allows the server to manage the different VMs. More specifically, the hypervisor performs two main functions: firstly, it allows creating VMs, and secondly, it performs the resource-sharing mechanism by which the common resources are assigned to each VM depending on different criteria: resource efficiency, fairness of sharing among VMs, etc. The hypervisor is usually run in the server.

Typically, hypervisors implement a resource-sharing mechanism commonly known as Generalized Processor Sharing (GPS), and also known as weighted-fair-scheduling or proportional-share-scheduling. An example of a GPS method is described in United States patent no. US6768744. In the market, an example of a system using a proportional-share-scheduling mechanism is the commercial VMWare ESX server. In GPS, each VM is assigned a weight value or 'share', according to which each VM is then assigned a share of the available resources proportional to its weight value or share. This mechanism ensures isolation among competing VMs by guaranteeing a minimum fraction of the overall processing capacity to each active VM, so that all VMs are protected against unexpected workload peaks in other VMs. So far, the qualitative behavior of the mean response time in each VM, which is an important performance metric, cannot be well predicted as a function of the shares.

Besides providing fair and efficient resource sharing, an additional important goal in the management of IT enterprises is to lower power consumption of its servers. In the last decade, the seek to minimize server power consumption paved the way to substantial research aimed at finding energy-aware designs at all levels ranging from chipsets to data-centers. For instance, at the data-center level, consolidation projects reduce energy usage by reducing the number of servers to use. In turn, at chipset level, speed-scaling designs reduce energy usage by varying the frequency speed of the processor unit depending on the overall load. Several approaches can thus be undertaken to develop greener systems.

At server level, some power-consumption reduction solutions have been defined. For example, United States patent applications US20110055830A1 and US20110055602A1 approach the problem of power-consumption reduction in VMs by applying a power reduction policy to a VM in case it is detected to be inactive. Similarly, patent application WO2010097306A1 also identifies inactivity but waits until detecting that all processor units are inactive, then putting the system into a reduced power consumption mode. European Patent application EP2071458A1 even describes the possibility of putting a number of server processor units into the sleep state. United States patent application US20100037038A1, considers a pool of processor units (cores) and considers the management of the pool of processor units with the objective to conserve power; specifically, the described energy-saving mechanism compares the number of instructions performed by the processor units with certain thresholds, and based on this comparison activates or deactivates processor units and switches one or more processor units to a lower power state.

Despite the above new solutions, when it comes to virtualized services (servers provided with VMs) and large networks it is still not clear up to what extent power reduction is possible. The main reason for this unclarity is the lack of accurate systematic frameworks able to predict the power consumption and performance of the system and to trade off between power consumption and performance.

It is an objective of the invention to provide a resource-sharing mechanism for hosting virtual machines (VMs) in an Internet server or other applicable virtualized resource-sharing system or equipment, where power consumption is reduced in comparison to conventional resource-sharing mechanisms, and where performance is controlled.

In addition, the invention seeks to provide a method that allows configuring a server or data center so that interesting power consumption and performance levels are obtained.

**Brief description of the invention**

The invention refers to a method for scaling the speed of operation of at least one processor unit in a virtualized resource-sharing system, wherein the virtualized system comprises at least one server and a total number of N virtual machines (VMs) running on $N \cdot a$ switched-on processor units. The method according to the invention allows reducing power consumption by performing the step of, at each moment in time, adjusting the speed of at least one processor unit (and preferably of all processor units) to its maximum speed multiplied by the factor:

$$\min\left(1, \frac{1}{N}\sum_{i=1}^{N} d_i k_i\right),$$

where, for each virtual machine i or $VM_i$, $k_i$ is 0 when $VM_i$ is inactive at this moment in time and 1 when it is active, and where d; is a non-negative constant.

In the present invention, power reduction is applied to all processor units in the whole system depending on the number of inactive VMs, which has been studied to give more power reduction than conventional systems where power reduction policies are only applied on inactive VMs, such as in US20110055830A1 and US20110055602A1.

In comparison to US20100037038A1, where only some processor units are deactivated or switched to a lower power state, the present application proposes (in its preferred embodiment in which all processor unit speeds are scaled) that all processor units are activated and work at the same speed, but it is the speed that processor units are working on which dynamically changes based on the number of active VMs at each moment in time. This allows predicting the power consumption reduction in a very efficient manner, and choosing the optimum system configuration values (setting values) for a good performance, as will be explained further on.

**Detailed description of the invention**

A system is considered comprising one or more servers, in which N total virtual machines (VMs) are comprised. Each VM, noted by $VM_i$ where $i$ = 1, ..., N, can have different characteristics depending on the type of jobs/services it is handling. Additionally, the system comprises a number of processor units whose resources are to be shared by the VMs. It is to be considered that $a$ is the ratio between the number of processor units that are switched on and the number of VMs comprised in the system (the number of switched-on processor units therefore being equal to $N \cdot a$).

The processor units comprised in the system are able to work at variable speed (frequency of operation) that can reach a maximum value that is considered to be equal to reference value I in the present detailed description. In conventional resource-sharing virtualized systems, processor units all work at the maximum speed. On the contrary, the resource-sharing mechanism proposed by the present invention deals with dynamically scaling the operation speed of each processor unit in order to reduce the system's total power consumption. Dynamic scaling is performed depending on the current state of the system, as will be explained hereafter.

The invention proposes a method for scaling the speed of operation of at least one of the processor units in the system, the method comprising the step of, at each moment in time, adjusting the speed of at least one processor unit to its maximum speed multiplied by the factor:

$$\min\left(1, \frac{1}{N}\sum_{i=1}^{N} d_i k_i\right),$$

where, for each virtual machine $i$ or $VM_i$, $k_i$ is 0 when $VM_i$ is inactive at this moment in time and 1 when it is active, and where $d_i$ is a non-negative constant that would allow to modulate the function if it were eventually necessary. If $d_i = 1$ for all i values, the equation above is equivalent to saying that the speed is reduced directly depending on the proportion of active VMs.

This means that, if the maximum speed of each processor unit is 1, the scaled processor unit or units will work at a speed $s(k)$ lower than or equal to 1, given by:

$$s(k) = \min\left(1, \frac{1}{N}\sum_{i=1}^{N} d_i k_i\right),$$

The principle behind this speed scaling is the following: the larger the number of active VMs, the larger the speed of each processor unit must be in order to provide enough processing resources per time unit to each VM. If all VMs are active, then the maximum capacity is used.

Processor units available in the market are usually not provided with a continuous range of possible speed values, but rather with a range of speed values comprising a discrete number of speed values. In this case, the method preferable adjusts the speed of each processor unit to the closest available value to the calculated s(k) detailed above.

This proposed speed-scaling can be easily implemented by the virtualized software, mainly because the virtualization software knows the number of active VMs at each moment in time.

Preferably, the speed of all the processor units that are switched on is adjusted. This allows predicting power consumption reduction and performance in an efficient manner.

The method according to the invention provides benefits in relation to conventional Generalized Processor Sharing (GPS) methods with regards to power consumption. To be able to prove the benefits, some general concepts must be explained and set beforehand. Firstly, in the literature (e.g., N. Bansal, T. Kimbrel, and K. Pruhs, "Speed scaling to manage energy and temperature", J. ACM, 54:3:1 3:39, 2007; F. Yao, A. Demers, and S. Shenker, "A scheduling model for reduced CPU energy", in Proc. of the 36th FOCS 95, pages 374-382, Washington, DC, USA, 1995, IEEE Computer Society), it is assumed that the power consumption P of a processor unit that is switched on, as a function of the current processor unit speed $s$, is given by $P = s^{\alpha} + c$, where $\alpha$ is a constant that is greater than 1 (depending on the constructer of the processor unit, different values for $\alpha$ are known, typically between 2 and 3) and c is some constant greater than zero. Secondly, let $\lambda_i$ be the arrival rate per time unit of new jobs requiring service from $VM_i$, and let $E(B_i)$ be the average amount of time needed to serve such a job; then, the traffic load $\rho_i$ offered to each $VM_i$ can be calculated as $\rho_i = \lambda_i E(B_i)$ and the total traffic load offered to all VMs is then

$$\rho = \sum_{i=1}^{N} \rho_i.$$

GPS resource-sharing methods, as mentioned in the introduction of this document, are based on assigning each VM a share of the available resources proportional to a predefined weight assigned to the VM. This means that under GPS each active VM i receives a fraction of

$$\frac{\phi_i}{\sum_{j=1}^{N} \phi_j k_j}$$

of the overall available capacity of the server or servers, where $\phi_i$ is the weight assigned to each VM $i$ and $k_j$ is 0 when each $VM_j$ is inactive at this moment in time and 1 when it is active.

In systems where a conventional GPS resource-sharing method is used but no processor unit speed scaling is performed (conventional GPS systems where all servers operate at maximum speed), it is known that under certain assumptions on the traffic characteristics (Poisson arrivals) the total long-run power consumption is given by:

$$P^{old} = N(\rho + ca) \text{ if } \rho < a,$$

and

$$P^{old} = N(a + ca) \text{ if otherwise.}$$

Instead, the present invention, more particularly in an embodiment in which processor unit speed scaling is performed in a GPS-provided system, proposes the following approximation for the total long-run power consumed:

$$P = N \cdot \left[ a \left( \frac{\rho}{a} \right)^{\alpha} + ca \right]$$

if a stability condition given by

$$\rho < a \cdot \min\left( 1, \frac{\sum_{i=1}^{N} d_i \, \rho_i / \phi_i}{\max_j \left( \rho_j / \phi_j \right)} \right)$$

is satisfied.

This approximation becomes exact as N grows large.

The method of the present invention also comprises the steps of calculating the power consumption according to the approximation above, and optionally monitoring the result in a visible way to the system user (e.g., on screen).

Assuming the stability condition of the present invention is satisfied so that the system is able to work correctly, then it is true that a > $\rho$ (implied by the stability condition). Additionally, as mentioned earlier it is true that $\alpha$ > 1. The combination of the two directly implies that $P^{old}$ > P, which can be checked if comparing the applicable $P^{old} = N (\rho + ca)$ (applicable because a > $\rho$) with the present invention's calculation of P. This means that a stable, GPS system where all processor units' working speeds are scaled according to the invention provides a power consumption that is reduced with respect to the power consumption provided by a conventional GPS system where the processor units always work at maximum speed.

In addition to power consumption reduction, the invention also proposes an approximation for the delay ($w_i$) as experienced by a job arriving in $VM_i$. This delay, according to the invention, is calculated by:

$$w_i = \frac{1}{\lambda_i} \frac{\rho \, \rho_i / \phi_i}{a \sum_{j=1}^{N} d_j \rho_j / \phi_j - \rho \, \rho_i / \phi_i}$$

if the stability condition

$$\rho < a \cdot \min\left( 1, \frac{\sum_{i=1}^{N} d_i \, \rho_i / \phi_i}{\max_j \left( \rho_j / \phi_j \right)} \right)$$

is satisfied.

This approximation becomes exact as N grows large.

The method of the present invention also comprises the steps of calculating the delay according to the approximation above, and optionally monitoring the result in a visible way to the system user (e.g., on screen).

Additionally, the invention provides a method for dynamically selecting some of the system's parameters in order to achieve a general performance objective. According to the invention, a general performance objective is to optimize some objective function of the delay ($w_i$) and the power consumption (P), taking into account possible upper bounds on the average delay ($w_i$) that need to be satisfied. The parameters for which a value can be selected are the weight assigned to each virtual machine ($\phi_i$), the number of processor units that are switched on (aN), and/or the constant $d_i$.

EP 2 568 353 A1

Example of optimal weight (dz) selection

If, for instance, the objective is to minimize the overall delay given by:

$$\sum_{i=1}^{N} w_i \lambda_i / \lambda \, ,$$

with $\lambda = \lambda_1 + ... + \lambda_N$, then the optimal choices for the weights $\phi_i$ are given by $\phi_i = \rho_i$, where $i = 1,..., N$. This estimation of the optimal weights given by the invention is very efficient but also simple to perform, due to the fact that $\rho_i$ values are always available in servers and other resource-sharing equipment, which are continuously measuring the traffic load $\rho_i$ offered to each $VM_i$.

Example of optimal selection of the ratio (*a*) between the number of processor units that are switched on and the number of VMs

In this second example, the objective is to calculate the optimum value of *a* in order to minimize the system's power consumption. Taking the invention's approximation for calculating P into consideration, the invention then proposes that the optimal ratio *a* between the number of processor units that are switched on and the number of VMs is calculated by

$$a^* = \rho \cdot \max\left( 1, \frac{\max_i \rho_i / \phi_i}{\sum_{i=1}^{N} d_i \rho_{i_i} / \phi_i}, \left((\alpha - 1)/c\right)^{1/\alpha} \right).$$

The formulas and equations proposed by the present invention have been conceived for a stationary system, in other words, for a system in which the number of switched-on processor units (N·*a*) and the traffic characteristics ($\lambda_i$, $E(B_i)$, $\rho_i$, $i = 1, ..., N$) are fixed. However, in practice, any of these parameters could vary over time. In this case, it is presumed that the equations would continue to be valid if variations were not excessively frequent; then, the invention would periodically check the values and dynamically re-calculate the power consumption, delay, optimum share values and/or other data.

As mentioned previously, it is possible that one server hosts several VMs and that the system even comprises more than one server. The system could, therefore, be a data centre consisting of many servers each hosting several VMs. In this context, one can think of the general question of how to dimension these data centres, i.e., how many servers to buy and how much capacity (number of processor units) should each server have, how to route arriving traffic to the different VMs, which server should host which VMs, which shares to set in each of the servers, etc. In this context, the calculations proposed by the invention are still valid, and they can be used to find the optimal way to dimension the data centre. In this sense, a general strategy for defining the data centre according to the invention would usually be one of the following: (i) given a budget for the total power consumption, optimize the overall performance as perceived in the VM's, (ii) given upper bounds on the delay in the VMs, minimize the total power consumption, (iii) or more general, minimize a general objective function under general constraints.

**Claims**

**1.** Method for scaling the speed of operation of at least one processor unit in a virtualized resource-sharing system, wherein the system comprises at least one server, a total number of N virtual machines (VMs) running on *N·a* switched-on processor units, the method being **characterized in that** it comprises the step of:

- at each moment in time, adjusting the speed of at least one processor unit to its maximum speed multiplied by a scaling factor:

$$\min\left(1, \frac{1}{N}\sum_{i=1}^{N} d_i k_i\right),$$

where, for each virtual machine i or VM$_i$, $k_i$ is 0 when VM$_i$ is inactive at this moment in time and I when it is active, and where d$_i$ is a non-negative constant.

2. Method according to claim 1, wherein the speed of all the processor units that are switched on is adjusted.

3. Method according to claim 1, wherein the processor unit is provided with a discrete number of available working speed values, and the method comprises the step of adjusting the processor unit's speed value to the available speed value that is closest to the processor unit's maximum speed multiplied by the scaling factor.

4. Method according to claim 1, wherein a Generalized Processor Sharing (GPS) resource-sharing method is used to distribute processor resources among VMs, the GPS method assigning a weight $\phi_j$ to each VM j, **characterized in that** the method comprises the step of:

- calculating the total long-run power consumed as:

$$P = N \cdot \left[ a\left(\frac{\rho}{a}\right)^{\alpha} + ca \right]$$

if the stability condition

$$\rho < a \cdot \min\left(1, \frac{\sum_{i=1}^{N} d_i \rho_i / \phi_i}{\max_j (\rho_j / \phi_j)}\right)$$

is satisfied, where $\rho_i$ is the traffic load offered to each VM$_i$, and where $\rho$ is the total traffic load on all VMs.

5. Method according to claim 4, further comprising the step of monitoring the calculated total long-run power consumed in a visible way to a user.

6. Method according to claim 4, wherein the calculation is repeated at least once throughout a time period, so to adapt its results to changes in the system.

7. Method according to claim 1, wherein a Generalized Processor Sharing (GPS) resource-sharing method is used to distribute processor resources among VMs, the GPS method assigning a weight $\phi_j$ to each VM j, **characterized in that** the method comprises the step of:

- calculating the delay ($w_i$) as experienced by a job arriving in VM$_i$ as:

$$w_i = \frac{1}{\lambda_i} \frac{\rho \, \rho_i / \phi_i}{a \sum_{j=1}^{N} d_j \rho_j / \phi_j - \rho \, \rho_i / \phi_i}$$

if the stability condition

$$\rho < a \cdot \min\left(1, \frac{\sum_{i=1}^{N} d_i \, \rho_i / \phi_i}{\max_j (\rho_j / \phi_j)}\right)$$

is satisfied, where $\lambda_i$ is the arrival rate per time unit of new jobs requiring service from $VM_i$, where $\rho_i$ is the traffic load offered to each $VM_i$, and where $\rho$ is the total traffic load on all VMs.

8. Method according to claim 7, further comprising the step of monitoring the calculated delay in a visible way to a user.

9. Method according to claim 7, wherein the calculation is repeated at least once throughout a time period, so to adapt its results to changes in the system.

10. Method according to claim 1, wherein a Generalized Processor Sharing (GPS) resource-sharing method is used to distribute processor resources among VMs, the GPS method assigning a weight $\phi_i$ to each VM i, **characterized in that** it comprises the steps of:

   - calculating a function of the power consumption (P) and the delay ($w_i$), respectively given by functions

$$P = N \cdot \left[ a\left(\frac{\rho}{a}\right)^{\alpha} + ca \right]$$

   and

$$w_i = \frac{1}{\lambda_i} \frac{\rho \, \rho_i / \phi_i}{a \sum_{j=1}^{N} d_j \rho_j / \phi_j - \rho \, \rho_i / \phi_i}$$

   if the stability condition

$$\rho < a \cdot \min\left(1, \frac{\sum_{i=1}^{N} d_i \, \rho_i / \phi_i}{\max_j (\rho_j / \phi_j)}\right)$$

   is satisfied, where $\lambda_i$ is the arrival rate per time unit of new jobs requiring service from $VM_i$, where $\rho_i$ is the traffic load offered to each $VM_i$, and where $\rho$ is the total traffic load on all VMs,
   - selecting the values of the weight assigned to each virtual machine ($\phi_i$), the ratio ($a$) and/or the constant $d_i$ between the number of processor units that are switched on and the number of VMs comprised in the system that optimize the function, and
   - adjusting the system to the selected values.

11. Method according to claim 10, wherein the calculation, the selection and the adjustment are repeated at least once throughout a time period, so to adapt its results to changes in the system.

12. Method according to claim 1, wherein a Generalized Processor Sharing (GPS) resource-sharing method is used to distribute processor resources among VMs, the GPS method assigning a weight $\phi_i$ to each VM i, where i = 1,..., N, wherein the traffic load $\rho_i$ offered to each VM i is known, **characterized in that** it comprises the step of assigning a weight to each VM i, given by $\phi_i = \rho i$.

**13.** Method according to claim 12, wherein the weight assignment is repeated at least once throughout a time period, so to adapt its results to changes in the system.

**14.** Method according to claim 1, wherein a Generalized Processor Sharing (GPS) resource-sharing method is used to distribute processor resources among VMs, **characterized in that** it comprises the step of adjusting the ratio (*a*) between the number of processor units that are switched on and the number of VMs to

$$a^* = \rho \cdot \max\left(1, \frac{\max_i \rho_i/\phi_i}{\sum_{i=1}^{N} d_i \rho_{i_i}/\phi_i}, \left((\alpha-1)/c\right)^{1/\alpha}\right).$$

**15.** Method according to claim 14, wherein the adjustment of the ratio (*a*) is repeated at least once throughout a time period, so to adapt its results to changes in the system.

Europäisches
Patentamt

European
Patent Office

Office européen
des brevets

# EUROPEAN SEARCH REPORT

**Application Number**

EP 11 00 7203

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/187776 A1 (BABA TOSHIYUKI [JP] ET AL) 23 July 2009 (2009-07-23) <br> * paragraph [0002] - paragraph [0036] * <br> * paragraph [0035] - paragraph [0036] * <br> * paragraph [0054] * <br> * paragraph [0087] - paragraph [0088] * <br> ----- | 1-15 | INV. <br> G06F1/32 <br> G06F9/50 |
| A | JIONG LUO ET AL: "Simultaneous Dynamic Voltage Scaling of Processors and Communication Links in Real-Time Distributed Embedded Systems", <br> IEEE TRANSACTIONS ON VERY LARGE SCALE INTEGRATION (VLSI) SYSTEMS, IEEE SERVICE CENTER, PISCATAWAY, NJ, USA, <br> vol. 15, no. 4, 1 April 2007 (2007-04-01), pages 427-437, XP011179760, <br> ISSN: 1063-8210, DOI: 10.1109/TVLSI.2007.893660 <br> * the whole document * <br> ----- | 1-15 | |
| | | | **TECHNICAL FIELDS SEARCHED (IPC)** <br> G06F |

The present search report has been drawn up for all claims

| Place of search | Date of completion of the search | Examiner |
|---|---|---|
| Munich | 5 March 2012 | Lo Turco, Salvatore |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

 

& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 11 00 7203

This annex lists the patent family members relating to the patent documents cited in the above-mentioned European search report.
The members are as contained in the European Patent Office EDP file on
The European Patent Office is in no way liable for these particulars which are merely given for the purpose of information.

05-03-2012

| Patent document cited in search report | Publication date | Patent family member(s) | Publication date |
|---|---|---|---|
| US 2009187776 A1 | 23-07-2009 | JP 4839328 B2<br>JP 2009175788 A<br>US 2009187776 A1 | 21-12-2011<br>06-08-2009<br>23-07-2009 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6768744 B
- US 20110055830 A1
- US 20110055602 A1
- WO 2010097306 A1
- EP 2071458 A1
- US 20100037038 A1

**Non-patent literature cited in the description**

- **N. BANSAL ; T. KIMBREL ; K. PRUHS.** Speed scaling to manage energy and temperature. *J. ACM,* 2007, vol. 54
- **F. YAO ; A. DEMERS ; S. SHENKER.** A scheduling model for reduced CPU energy. *Proc. of the 36th FOCS,* 1995, vol. 95, 374-382